# EUROPÄISCHE PATENTSCHRIFT

(11) **EP 3 662 798 B1**
(45) Veröffentlichungstag und Bekanntmachung des Hinweises auf die Patenterteilung: **20.07.2022**
(21) Anmeldenummer: 19208014.1
(22) Anmeldetag: 08.11.2019
(51) Int. Cl.: A47J 43/044, A47J 43/06, A47J 43/07

(54) **STABMIXERFUSSTEIL UND STABMIXER**
ROD MIXER FOOT AND ROD MIXER
PIED DE MIXEUR PLONGEUR ET MIXEUR PLONGEUR

(30) Priorität: 07.12.2018 DE 102018221207
(43) Veröffentlichungstag der Anmeldung: 10.06.2020
(73) Patentinhaber: BSH Hausgeräte GmbH, 81739 München (DE)
(72) Erfinder: Golavsek, Samo, 3312 Prebold (SI); Semeja, Uros, 3327 Smartno ob Paki (SI); Hribersek, Anton, 3330 Mozirje (SI); Zlaus, Uros, 3201 Smartno v Rozni dolini (SI)

(56) Entgegenhaltungen:
- EP-A1- 2 394 548
- EP-A1- 2 465 396
- AU-A1- 2013 203 819
- DE-A1- 3 307 023

## Beschreibung

Die vorliegende Erfindung betrifft ein Stabmixerfußteil zur Verbindung mit einem Griff- und Motorteil eines Stabmixers. Die Erfindung betrifft weiterhin einen Stabmixer mit einem Stabmixerfußteil und einem Griff- und Motorteil.

Stabmixer (bzw. Pürierstäbe) weisen in der Regel ein langgestrecktes Stabmixerfußteil auf, an dessen einem Ende ein rotierbares Werkzeug zum Zerkleinern oder Rühren von Lebensmitteln angeordnet ist. An seinem anderen Ende kann ein solches Stabmixerfußteil mit einem Griff- und Motorteil lösbar verbunden und so eine Welle des Werkzeugs an einen im Griff- und Motorteil angeordneten Elektromotor angekuppelt werden.

Die Verbindungsstelle von Stabmixerfußteil und Griff- und Motorteil begrenzt dabei eine Tiefe, bis zu der das Werkzeug maximal in ein Lebensmittel eingetaucht werden sollte. Bei einem Überschreiten dieser Grenze besteht die Gefahr, dass Flüssigkeit und Nahrungsmittel in das Gehäuse des Griff- und Motorteils eindringen. Dies kann zur Folge haben, dass der Elektromotor beschädigt wird oder dass sogar ein Anwender einen elektrischen Schlag bekommt, zudem bedingt dann die dem Anwender nicht gegebene Möglichkeit zur Reinigung des Inneren des Griff- und Motorteils eine zunehmende Ansammlung von Schmutz und Bakterien.

Durch ein Verlängern eines Stabmixerfußteils in Richtung einer Rotationsachse des Werkzeugs kann die genannte Grenze verschoben und eine mögliche Eintauchtiefe damit vergrößert werden. Eine derartige Verlängerung vermindert jedoch die Handlichkeit des zugehörigen Stabmixers, zudem wird durch sie aufgrund des längeren Hebels die Anforderung an die Stabilität der Verbindung des Stabmixerfußteils mit dem Griff- und Motorteil erhöht.

Die Druckschriften AU 2013203819 A1 und DE 3307023 A1 offenbaren Stabmixer, bei denen die Verbindung zwischen Fuß- und Motorteil mittels formschlüssiger Verbindungen zwischen der den Fußteil umgebenden Manschette und der Außenwand des Motorteils realisiert wird. Die Druckschrift EP 2465396 A1 offenbart einen Stabmixer mit einer magnetischen Kupplung zwischen Fuß- und Motorteil.

Der vorliegenden Erfindung liegt die Aufgabe zugrunde, eine alternative Technik bereitzustellen, mit der die Gefahr, dass ein Anwender einen Stabmixer versehentlich zu weit in ein bearbeitetes Lebensmittel eintaucht, verringert wird.

Die Aufgabe wird gelöst durch ein Stabmixerfußteil nach Anspruch 1 und einen Stabmixer gemäß Anspruch 8. Vorteilhafte Ausführungsformen sind in den Unteransprüchen, der Beschreibung und den Figuren offenbart.

Ein erfindungsgemäßes Stabmixerfußteil weist ein Werkzeugende und (diesem entgegengesetzt) ein Verbindungsende auf. Am Werkzeugende ist ein rotierbares Werkzeug (zum Bearbeiten - insbesondere Zerkleinern oder Verrühren - von Lebensmittel) angeordnet oder anzuordnen. Das Verbindungsende hingegen ist dazu eingerichtet, mit einem Griff- und Motorteil eines Stabmixers verbunden zu werden, um eine Welle des rotierbaren Werkzeugs an einen Elektromotor im Griff- und Motorteil anzukuppeln.

Das Verbindungsende weist dabei wenigstens ein Befestigungsmittel auf, das in eine Öffnung im Griff- und Motorteil einzusetzen und darin zu befestigen ist. Das Befestigungsmittel umfasst erfindungsgemäß einen (beispielsweise zylinder- oder kegelartigen) Zapfen, der dazu eingerichtet ist, in die Öffnung eingeführt zu werden. Ein derartiger Zapfen ist als lösbare Steckverbindung mit mindestens einem Rastelement (beispielsweise einer gefedert gelagerten Kugel und/oder einer Aushöhlung zur Aufnahme einer gefedert gelagerten Kugel) ausgebildet und/oder umfasst ein Gewinde. Das mindestens eine Rastelement bzw. Gewinde kann dann jeweils dazu eingerichtet sein, mit einem entsprechenden Gegenelement bzw. Gegengewinde in der Öffnung zusammenzuwirken.

Darüber hinaus weist das Verbindungsende eine Manschette auf, die dazu eingerichtet ist, mindestens einen Teil eines Gehäuses des Griff- und Motorteiles zu umgeben, wenn der Stabmixerfußteil damit verbunden ist. Dabei ist die Manschette um das wenigstens eine Befestigungsmittel oder zumindest um einen Teil desselben herum angeordnet, sie bildet also einen Ring aus, in dessen Innerem mindestens ein Teil des Befestigungsmittels ist. Auf diese Weise kann ein erfindungsgemäßes Stabmixerfußteil mittels des Befestigungsmittels solide in der Öffnung im Griff- und Motorteil verankert werden, und die zumindest teilweise über das Gehäuse des Griff- und Motorteils hochgezogene Manschette schützt auch bei einem tiefen Eintauchen des Werkzeugs davor, dass Flüssigkeit bzw. püriertes Lebensmittel in die Öffnung des Griff- und Motorteiles gelangt bzw. dieses verschmutzt.

Insbesondere bildet die Manschette vorzugsweise die Wand eines Bechers, an dessen Boden das mindestens eine Befestigungsmittel ins Innere des Bechers hineinragt.

Ein erfindungsgemäßer Stabmixer umfasst ein Griff- und Motorteil sowie ein damit verbundenes oder zu verbindendes erfindungsgemäßes Stabmixerfußteil gemäß einer der in dieser Schrift offenbarten Ausführungsformen.

Die Tatsache, dass die Befestigung des Stabmixerfußteils mit dem Griff- und Motorteil erfindungsgemäß in der Öffnung und damit zentral erfolgt, die Manschette also nicht die Verbindung stabilisieren muss, erlaubt eine Ausführung der Manschette aus einem dünnen Material, also mit einer geringen Wanddicke, beispielsweise von (im Mittel) nicht mehr als 1,5mm oder sogar nicht mehr als 1mm. Das Stabmixerfußteil und ein dieses umfassender Stabmixer können damit besonders schlank ausgebildet sein, was ein bequemes Umgreifen für einen Anwender auch mit kleiner Hand ermöglicht.

Das Material der Manschette kann mindestens in einem Bereich flexibel bzw. elastisch sein. In diesem Fall kann insbesondere ein Betätigungselement (z.B. eine Drucktaste) zum Lösen der Befestigung (des Stabmixerfußteils am Griff- und Motorteil) im verbundenen Zustand unter der Manschette angeordnet und dazu vorgesehen sein, dass es durch die Manschette hindurch (also durch Ausüben von Druck auf die Manschette) bedient wird.

Gemäß vorteilhaften Ausführungsformen der vorliegenden Erfindung ist die Manschette kegelstumpfförmig ausgebildet, wobei sie sich vorzugsweise mit zunehmendem Abstand vom Werkzeugende weitet. Dies ermöglicht ein besonders einfaches Verbinden des Stabmixerfußteils mit dem Griff- und Motorteil.

Ein dem Griff- und Motorteil zuzuwendender bzw. zugewandter Rand der Manschette liegt vorzugsweise in einer Ebene: Da ein bei einer Verwendung des Stabmixers tiefster Punkt auf diesem Rand die mögliche Eintauchtiefe des Werkzeugs bestimmt, erleichtert die ebene Ausführung einem Anwender das unmittelbare Erkennen der maximalen Tiefe. Eine Rotationsachse des Werkzeugt steht vorzugsweise orthogonal zur genannten Ebene.

An einem vom Griff- und Motorteil abgewandten bzw. abzuwendenden Rand kann die Manschette lösbar mit dem mindestens einen Befestigungsmittel verbunden bzw. zu verbinden sein, beispielsweise mittels eines Schraubgewindes und/oder durch Einsetzen in eine das Befestigungsmittel umlaufende Ringnut. Eine derartige Ausführungsform vereinfacht eine Reinigung des Stabmixerfußteils.

Alternativ kann die Manschette einteilig mit dem mindestens einen Befestigungsmittel ausgebildet sein, also mit diesem (beispielsweise durch Kleben oder Anschweißen) dauerhaft verbunden oder monolithisch gefertigt sein (z.B. mittels Spritzgusses). Solche Ausführungsformen ermöglichen eine besonders zuverlässige Abdichtung.

Vorzugsweise ist das Griff- und Motorteil eines erfindungsgemäßen Stabmixers dazu vorgesehen, bei dessen Verwendung unmittelbar oberhalb der Manschette oder sogar mindestens teilweise an der Manschette vom Anwender gehalten zu werden. Insbesondere kann das Griff- und Motorteil mindestens eine Griffmulde und/oder ein nachgiebiges Griffmaterial umfassen, die/das in einem verbundenen Zustand von Stabmixerfußteil und Griff- und Motorteil nicht mehr als 1,5cm, nicht mehr als 1cm oder nicht mehr als 0,5cm von der Manschette (bzw. dessen vom Werkzeugende abgewandten Rand) beabstandet ist oder das sogar an die Manschette angrenzt. Damit wird einem Anwender besonders deutlich ein Gefühl dafür vermittelt, wie weit der Stabmixer maximal in das jeweilige Lebensmittel eingetaucht werden sollte.

Gemäß vorteilhaften Ausführungsformen der vorliegenden Erfindung hat die Manschette eine Manschettenhöhe (d.h. einer Ausdehnung in Richtung einer Rotationsachse des rotierbaren Werkzeugs) von mindestens 6cm, mindestens 7cm oder mindestens 8cm und/oder von höchstens 12cm oder höchstens 10cm. Mit einer derartigen Mindesthöhe vergrößert die Manschette effektiv eine mögliche Eintauchtiefe, die genannte Obergrenze für die Höhe ermöglicht ein Halten des Griff- und Motorteils oberhalb der Manschette, ohne dass das Griff- und Motorteil unhandlich lang zu sein braucht.

Gemäß vorteilhaften Ausführungsvarianten eines erfindungsgemäßen Stabmixers umgibt die Manschette des Stabmixerfußteils in einem Zustand, in dem das Stabmixerfußteil mit dem Griff- und Motorteil verbunden ist, einen Elektromotor im Griff- und Motorteil (innerhalb dessen Gehäuses) ganz oder teilweise. In einer vorgesehenen vertikalen Verwendungsposition des Stabmixers ist der Elektromotor also mindestens teilweise ebenso tief angeordnet wie die Manschette. Dies ermöglicht eine vorteilhafte Lage des Schwerpunkts des Stabmixers und vereinfacht damit dessen Verwendung, zudem kann das Griff- und Motorteil damit besonders klein ausgebildet sein.

In einem Zustand, in dem das Stabmixerfußteil und das Griff- und Motorteil miteinander verbunden sind, umgibt die Manschette das Gehäuse des Griff- und Motorteils vorzugsweise zu mindestens einem Drittel und/oder zu höchstens der Hälfte einer (in Richtung einer Rotationsachse des rotierbaren Werkzeugs gemessenen) Länge des Gehäuses. Derartige Abmessungen erlauben eine optimale Vergrößerung der möglichen Eintauchtiefe bzw. ein einfaches Verbinden und Lösen von Stabmixerfußteil und Griff- und Motorteil mit- bzw. voneinander.

Im Folgenden wird ein bevorzugtes Ausführungsbeispiele der Erfindung anhand einer Zeichnung näher erläutert. Es versteht sich, dass einzelne Teile und Komponenten auch anders kombiniert werden können als dargestellt.

Es zeigt schematisch:

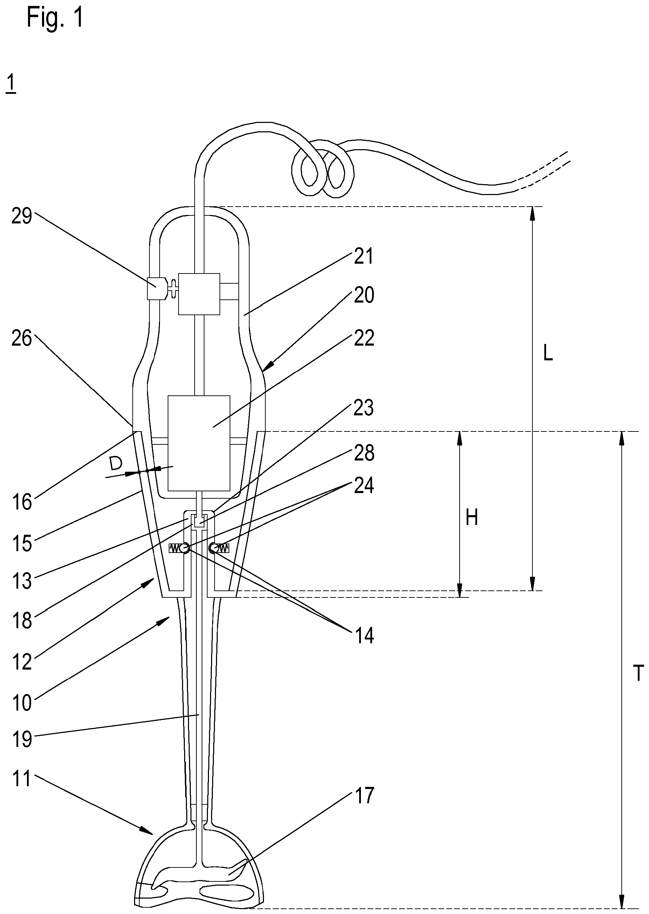

- Figur 1:: eine exemplarische Ausführungsform eines erfindungsgemäßen Stabmixers im Querschnitt.

In Figur 1 ist ein Beispiel eines erfindungsgemäßen Stabmixers 1 im Querschnitt dargestellt. Der Stabmixer 1 umfasst eine exemplarische Ausführungsform eines erfindungsgemäßen Stabmixerfußteils 10 sowie ein Griff- und Motorteil 20, die im dargestellten Zustand lösbar miteinander verbunden sind.

Das Stabmixerfußteil 10 umfasst eine Welle 19, in deren axialer Richtung es langgestreckt ausgebildet ist. An einem Werkzeugende 11 des Stabmixerfußteils ist an einem Ende der Welle 19 ein mittels dieser rotierbares Werkzeug 17 angeordnet. Am dem Werkzeugende 11 entgegengesetzten Verbindungsende 12 des Stabmixerfußteils 10 weist dieses ein Befestigungsmittel 13 auf, das als eine lösbare Steckverbindung mit einem Zapfen und darin eingebrachten Mulden 14 ausgebildet ist.

Im dargestellten verbundenen Zustand von Stabmixerfußteil 10 und Griff- und Motorteil 20 ist das Befestigungsmittel 13 so in eine Öffnung 23 im Griff- und Motorteil 20 eingesetzt, dass darin angeordnete gefedert gelagerte Kugeln 24 in die Mulden 14 im Zapfen eingreifen. Auf diese Weise ist die Verbindung fixiert.

Am dem Ende mit dem rotierbaren Werkzeug 17 entgegengesetzten Ende der Welle 19 ist ein Kupplungselement 18 angeordnet, das im dargestellten Zustand an ein Kupplungsgegenelement 28 des Griff- und Motorteils 20 angekoppelt und so mit dessen Elektromotor 22 verbunden ist. Dieser ist mittels eines Schalters 29 zu bedienen.

Das Verbindungsende 11 des Stabmixerfußteils 10 umfasst weiterhin eine Manschette 15, die um das Befestigungsmittel 13 herum angeordnet ist und die im dargestellten, verbundenen Zustand einen Teil des Gehäuses 21 des Griff- und Motorteils 20 umgibt: Der Teil umfasst dabei im gezeigten Beispiel vorteilhaft zwischen einem Drittel und der Hälfte einer in Richtung der Rotationsachse des Werkzeugs 17 gemessenen Länge L des Griff- und Motorteils 20.

Die Manschette ist im gezeigten Ausführungsbeispiel kegelstumpfförmig mit einer Höhe H (in Richtung der Rotationsachse des rotierbaren Werkzeugs gemessen) ausgebildet; gemäß vorteilhaften Ausführungsformen beträgt die Höhe H mindestens 6cm, mindestens 7cm oder mindestens 8cm und/oder höchstens 12cm oder höchstens 10cm.

Ein dem Werkzeugende 11 entgegengesetzter Rand 16 der Manschette 15, der vorzugsweise entlang einer Ebene verläuft (in der Figur aufgrund des Querschnitts nicht erkennbar) stößt im gezeigten Ausführungsbeispiel und Zustand an eine Schulter 26 am Gehäuse 21 des Griff- und Motorteils an, wobei die äußeren Oberflächen der Manschette und des Gehäuses im Übergang fluchten. Die so gebildete kantenarme Ausführung gewährleistet ein besonders bequemes Anfassen.

Eine mittlere Dicke D der Manschette 15 beträgt vorzugsweise höchstens 1,5mm oder höchstens 1mm. Der Stabmixer kann damit besonders schlank ausgebildet und damit gut zu umgreifen sein.

Aufgrund der Manschette 15 kann das Stabmixerfußteil 10 bis zu einer (gegenüber herkömmlichen Stabmixern vergrößerten) Eintauchtiefe T in ein bearbeitetes Lebensmittel eingetaucht werden, ohne dass Flüssigkeit oder Lebensmittel in die Öffnung 23 und von dort weiter in das Innere des Griff- und Motorteils 20 eindringen kann.

Im gezeigten Ausführungsbeispiel ist die Manschette 15 monolithisch mit dem durch den Zapfen mit den Mulden 14 gebildeten Befestigungsmittel 13 geformt, beispielsweise als ein Spritzgussteil. In alternativen Varianten ist die Manschette dauerhaft mit zumindest einem Teil des Befestigungsmittels verbunden (z.B. angeklebt oder angeschweißt), oder die Manschette kann lösbar mit zumindest einem Teil des Befestigungsmittels verbunden bzw. zu verbinden sein.

Offenbart ist ein Stabmixerfußteil 10 mit einem Werkzeugende 11 und einem Verbindungsende 12. Am Werkzeugende 11 ist ein rotierbares Werkzeug 17 angeordnet oder anzuordnen. Das Verbindungsende 12 dient zur Verbindung des Stabmixerfußteiles 10 mit einem Griff- und Motorteil 20. Es umfasst wenigstens ein Befestigungsmittel 13 zum Einsetzen und Befestigen in eine/r Öffnung 23 des Griff- und Motorteils 20 und sowie eine Manschette 15. Diese ist um zumindest einen Teil des wenigstens einen Befestigungsmittels 13 herum angeordnet und dazu eingerichtet, in einem mit dem Griff- und Motorteil 20 verbundenen Zustand des Stabmixerfußteils 10 mindestens einen Teil eines Gehäuses 21 des Griff- und Motorteiles zu umgeben.

Offenbart ist weiterhin ein Stabmixer 1 mit einem Stabmixerfußteil 10 und einem damit verbundenen oder zu verbindenden Griff- und Motorteil 20.

### Bezugszeichen

- 1: Stabmixer

- 10: Stabmixerfußteil
- 11: Werkzeugende
- 12: Befestigungsende
- 13: Befestigungsteil
- 14: Mulden
- 15: Manschette
- 16: Rand der Manschette 15
- 17: Werkzeug
- 18: Kupplungselement
- 19: Welle

- 20: Griff- und Motorelement
- 21: Gehäuse des Griff- und Motorelements 20
- 22: Elektromotor
- 23: Öffnung im Griff- und Motorelement 20
- 24: gefedert gelagerte Kugeln
- 26: Schulter
- 28: Kupplungsgegenelement

- D: Dicke der Manschette 15
- H: Höhe der Manschette 15
- L: Länge des Griff- und Motorteils
- T: mögliche Eintauchtiefe des Stabmixers 1

## Patentansprüche

1. Stabmixerfußteil (10) mit einem Werkzeugende (11), an dem ein rotierbares Werkzeug (17) angeordnet oder anzuordnen ist, sowie mit einem Verbindungsende (12) zur Verbindung des Stabmixerfußteiles (10) mit einem Griff- und Motorteil (20), **dadurchgekennzeichnet, dass** das Verbindungsende (12) umfasst:
- wenigstens ein Befestigungsmittel (13) zum Einsetzen und Befestigen des Stabmixerfußteiles (10) in eine/r zentrale/n Öffnung (23) des Griff- und Motorteils (20), wobei das Befestigungsmittel (13) einen Zapfen umfasst, der als lösbare Steckverbindung mit mindestens einem Rastelement ausgebildet ist und/oder ein Gewinde umfasst, und
- eine Manschette (15), die um zumindest einen Teil des wenigstens einen Befestigungsmittels (13) herum angeordnet und dazu eingerichtet ist, in einem mit dem Griff- und Motorteil (20) verbundenen Zustand des Stabmixerfußteils (10) mindestens einen Teil eines Gehäuses (21) des Griff- und Motorteiles zu umgeben.

2. Stabmixerfußteil gemäß Anspruch 1, wobei die Manschette (15) eine mittlere Wanddicke (D) von höchstens 1,5mm oder höchstens 1mm aufweist.

3. Stabmixerfußteil gemäß einem der Ansprüche 1 oder 2, wobei die Manschette (15) kegelstumpfförmig ausgebildet ist.

4. Stabmixerfußteil gemäß einem der vorhergehenden Ansprüche, wobei ein vom Werkzeugende (11) abgewandter Rand (16) der Manschette (15) im Wesentlichen entlang einer Ebene verläuft.

5. Stabmixerfußteil gemäß einem der vorhergehenden Ansprüche, wobei die Manschette lösbar mit dem mindestens einen Befestigungsmittel verbunden bzw. zu verbinden ist, beispielsweise mittels eines Schraubgewindes und/oder durch Einsetzen in eine das Befestigungsmittel umlaufende Ringnut.

6. Stabmixerfußteil gemäß einem der Ansprüche 1 bis 4, wobei die Manschette (15) einteilig zumindest mit einem Teil des wenigstens einen Befestigungsmittels (13) ausgebildet ist.

7. Stabmixerfußteil gemäß einem der vorhergehenden Ansprüche, wobei die Manschette (15) eine in Richtung einer Rotationsachse des rotierbaren Werkzeugs gemessene Manschettenhöhe (H) von
- mindestens 6cm, mindestens 7cm oder mindestens 8cm und/oder
- höchstens 12cm oder höchstens 10cm
hat.

8. Stabmixer (1) mit einem Griff- und Motorteil (20) sowie einem damit verbundenen oder zu verbindenden Stabmixerfußteil (10) nach einem der vorhergehenden Ansprüche.

9. Stabmixer gemäß Anspruch 8, wobei die Manschette (15) des Stabmixerfußteils (10) in einem Zustand, in dem das Stabmixerfußteil mit dem Griff- und Motorteil (20) verbunden ist, einen Elektromotor (22) des Griff- und Motorteils ganz oder teilweise umgibt.

10. Stabmixer gemäß einem der Ansprüche 8 oder 9, wobei in einem Zustand, in dem das Stabmixerfußteil mit dem Griff- und Motorteil (20) verbunden ist, die Manschette (15) des Stabmixerfußteils das Gehäuse (21) des Griff- und Motorteils zu mindestens einem Drittel einer in Richtung einer Rotationsachse des rotierbaren Werkzeugs gemessenen Länge (L) des Gehäuses (21) umgibt.

## Claims

1. Immersion blender base part (10) with a tool end (11), on which a rotatable tool (17) is arranged or is to be arranged, as well as with a connection end (12) for connecting the immersion blender base part (10) to a handle and motor part (20), **characterised in that** the connection end (12) comprises:
- at least one fastening means (13) for inserting and fastening the immersion blender base part (10) into/in a central opening (23) of the handle and motor part (20), wherein the fastening means (13) comprises a pin, which is embodied as a releasable plug-in connection with at least one latching element and/or comprises a thread, and
- a cuff (15), which is arranged around at least part of the at least one fastening means (13) and is configured to surround at least part of the housing (21) of the handle and motor part in a state in which the immersion blender base part (10) is connected to the handle and motor part (20).

2. Immersion blender base part according to claim 1, wherein the cuff (15) has an average wall thickness (D) of at most 1.5mm or at most 1mm.

3. Immersion blender base part according to one of claims 1 or 2, wherein the cuff (15) is embodied in the shape of a truncated cone.

4. Immersion blender base part according to one of the preceding claims, wherein an edge (16) of the cuff (15) facing away from the tool end (11) substantially runs along a plane.

5. Immersion blender base part according to one of the preceding claims, wherein the cuff is connected or is to be connected to the at least one fastening means in a releasable manner, for example by means of a helical thread and/or by inserting into an annular groove running around the fastening means.

6. Immersion blender base part according to one of claims 1 to 4, wherein the cuff (15) is embodied in one piece with at least part of the at least one fastening means (13).

7. Immersion blender base part according to one of the preceding claims, wherein the cuff (15) has a cuff height (H), measured in the direction of an axis of rotation of the rotatable tool, of
- at least 6cm, at least 7cm or at least 8cm and/or
- at most 12cm or at most 10cm.

8. Immersion blender (1) with a handle and motor part (20) as well as an immersion blender base part (10) according to one of the preceding claims that is connected or is to be connected thereto.

9. Immersion blender according to claim 8, wherein the cuff (15) of the immersion blender base part (10) fully or partially surrounds an electric motor (22) of the handle and motor part in a state in which the immersion blender base part is connected to the handle and motor part (20).

10. Immersion blender according to one of claims 8 or 9, wherein, in a state in which the immersion blender base part is connected to the handle and motor part (20), the cuff (15) of the immersion blender base part surrounds the housing (21) of the handle and motor part by at least a third of a length (L) of the housing (21) measured in the direction of an axis of rotation of the rotatable tool.

## Revendications

1. Pied de mixeur plongeur (10) avec une extrémité d'outil (11) sur laquelle un outil rotatif (17) est disposé ou doit être disposé, et avec une extrémité de raccordement (12) pour relier le pied de mixeur plongeur (10) à une partie poignée et une partie moteur (20), **caractérisé en ce que** l'extrémité de raccordement (12) comprend :
- au moins un moyen de fixation (13) pour insérer et fixer le pied de mixeur plongeur (10) dans une ouverture centrale (23) de la partie poignée et de la partie moteur (20), le moyen de fixation (13) comprenant une goupille qui, en tant que connecteur amovible est formée avec au moins un élément d'encliquetage et/ou comprend un filetage, et
- un manchon (15), qui est agencé autour d'au moins une partie de l'au moins un moyen de fixation (13) et est conçu pour entourer, dans un état relié du pied de mixeur plongeur (10) avec la partie poignée et la partie moteur (20), au moins une partie d'un boîtier (21) de la partie poignée et de la partie moteur.

2. Pied de mixeur plongeur selon la revendication 1, dans lequel le manchon (15) présente une épaisseur de paroi moyenne (D) d'au plus 1,5 mm ou d'au plus 1 mm.

3. Pied de mixeur plongeur selon l'une des revendications 1 ou 2, dans lequel le manchon (15) a une forme tronconique.

4. Pied de mixeur plongeur selon l'une des revendications précédentes, dans lequel un bord (16) du manchon (15) à l'opposé de l'extrémité de l'outil (11) s'étend essentiellement le long d'un plan.

5. Pied de mixeur plongeur selon l'une des revendications précédentes, dans lequel le manchon est relié de manière amovible ou doit être relié audit au moins un moyen de fixation, par exemple au moyen d'un filetage et/ou par insertion dans une rainure annulaire entourant le moyen de fixation.

6. Pied de mixeur plongeur selon l'une des revendications 1 à 4, dans lequel le manchon (15) est formé d'un seul tenant avec au moins une partie de l'au moins un moyen de fixation (13).

7. Pied de mixeur plongeur selon l'une des revendications précédentes, dans lequel le manchon (15) a une hauteur de manchon (H) dans la direction d'un axe de rotation de l'outil rotatif
- d'au moins 6 cm, au moins 7 cm ou au moins 8 cm et/ou
- d'au plus 12 cm ou au plus 10 cm.

8. Mixeur plongeur (1) avec une partie poignée et une partie moteur (20) et un pied de mixeur plongeur (10) relié ou à relier à celui-ci selon l'une des revendications précédentes.

9. Mixeur plongeur selon la revendication 8, dans lequel le manchon (15) du pied de mixeur plongeur (10) entoure complètement ou partiellement un moteur électrique (22) de la partie poignée et de la partie moteur dans un état dans lequel le pied de mixeur plongeur est relié à la partie poignée et à la partie moteur (20).

10. Mixeur plongeur selon l'une des revendications 8 ou 9, dans lequel, dans un état dans lequel le pied de mixeur plongeur est relié à la partie poignée et à la partie moteur (20), le manchon (15) du pied de mixeur plongeur entoure le boîtier (21) de la partie poignée et de la partie moteur sur au moins un tiers d'une longueur (L) du boîtier (21) dans la direction d'un axe de rotation de l'outil rotatif.
